# EUROPÄISCHE PATENTSCHRIFT

(11) **EP 2 992 793 B1**
(45) Veröffentlichungstag und Bekanntmachung des Hinweises auf die Patenterteilung: **06.06.2018**
(21) Anmeldenummer: 15180851.6
(22) Anmeldetag: 13.08.2015
(51) Int. Cl.: A47J 31/60

(54) **VERFAHREN ZUR REINIGUNG EINES MILCH FÜHRENDEN STRÖMUNGSLEITUNGSSYSTEMS EINES GETRÄNKEAUTOMATEN UND GETRÄNKEAUTOMAT ZUR DURCHFÜHRUNG DES VERFAHRENS**
METHOD FOR CLEANING A FLOW CONDUIT SYSTEM CONVEYING MILK OF A BEVERAGE DISPENSER AND BEVERAGE DISPENSER FOR CARRYING OUT THE METHOD
PROCÉDÉ DE NETTOYAGE D'UN SYSTÈME DE CONDUITE D'ÉCOULEMENT DESTINÉE À GUIDER LE LAIT D'UN AUTOMATE DE BOISSONS ET AUTOMATE DE BOISSONS DESTINÉ À EXECUTER LE PROCÉDÉ

(30) Priorität: 04.09.2014 DE 102014112756
(43) Veröffentlichungstag der Anmeldung: 09.03.2016
(73) Patentinhaber: Miele & Cie. KG, 33332 Gütersloh (DE)
(72) Erfinder: Tembaak, Jutta, 49492 Westerkappeln (DE); Last, Mario, 33739 Bielefeld (DE)

(56) Entgegenhaltungen:
- EP-A1- 1 911 382
- EP-B1- 2 078 481

## Beschreibung

Die Erfindung betrifft ein Verfahren zur Reinigung eines Milch führenden Strömungsleitungssystems eines Getränkeautomaten nach dem Oberbegriff des Patentanspruches 1 und einen Getränkeautomaten zur Durchführung des Verfahrens nach dem Oberbegriff des Patentanspruches 7.

Bekanntlich weist Wasser regional sehr unterschiedliche chemische Zusammensetzungen auf. Insbesondere Calciumcarbonat (CaCO3) und Magnesiumcarbonat (MgCO3) sowie deren chemische Verbindungen stellen ein besonderes Problem dar, weil sich diese auch als Karbonate oder umgangssprachlich als "Kalk" bezeichneten Stoffe in Fluiden und insbesondere in Wasser (H2O) führenden Leitungen und Aggregaten absetzen und diese über einen längeren Zeitraum betrachtet, entweder außer Betrieb setzen oder eine ungehinderte Fluidströmung zumindest in entscheidendem Maße behindern. Für die Bestimmung der Eigenschaften des Wassers ist folglich dessen Karbonathärte maßgeblich, die bei den zuständigen Wasserwerken angefragt werden kann. Das Maß der Karbonathärte des Wassers lässt sehr genaue Rückschlüsse auf die Häufigkeit zu, mit der Wasser führende Leitungen oder Armaturen entkalkt werden müssen. Um dem Problem der Kalkablagerungen in Strömungsleitungssystemen und technischen Geräten zu begegnen, sind bereits Reinigungsmittel bekannt und im Einsatz, die auf Grund einer chemischen Reaktion in der Lage sind, "Kalk" zu lösen. Hierbei handelt es sich in der Regel um Säuren, das heißt, im weiteren Sinne um Reinigungsmittel, deren pH-Wert < 7,0 ist. Ein derartiges Reinigungsmittel wird in einem austauschbaren oder nachfüllbareren Vorratsbehälter innerhalb des Getränkeautomaten aufbewahrt und bei Bedarf aus dem Vorratsbehälter entnommen, um eine Entkalkung durchzuführen. Dabei ist es ferner bekannt, derartige Reinigungsmittel in flüssiger Form, als Pulver oder in gepresster Form einzusetzen, wobei vor seiner Anwendung jeweils eine Lösung des Reinigungsmittels mit Wasser zu einem strömungsfähigen Medium erfolgt.

Für die Zubereitung von Aufgussgetränken wird darüber hinaus häufig Milch benötigt, die für einen Getränkeautomaten insofern ein erhebliches Problem darstellt, weil sich in den mit Milch beaufschlagten Strömungsleitungen Protein- und beziehungsweise Eiweißablagerungen absetzen, die zum Teil nur sehr schwer zu entfernen sind. Zur Pflege der mit Milch beaufschlagten Strömungsleitungen eines Strömungsleitungssystems sind daher spezielle, zumeist basische Reinigungsmittel, deren pH-Wert > 7,0 beträgt, erforderlich und im Einsatz.

Bei der Reinigung des Strömungsleitungssystems mit alkalischen oder basischen Reinigungsmitteln ist häufig festzustellen, dass nach dem Reinigungsvorgang Reste der Lauge und insbesondere chemische Härtebildner im Strömungsleitungssystem zurückbleiben. Diese müssen bisher durch mehrere, intensive und aufeinanderfolgende Spülvorgänge mit Wasser aufwändig entfernt werden. Die Entfernung der Proteinbeziehungsweise Eiweißablagerungen mit Hilfe der zuvor erwähnten sauren Reinigungsmittel zur Kalkentfernung ist nicht möglich, da sie zu einer unerwünschten Verklumpung der Proteine beziehungsweise Eiweiße führen würden. Verbleibende Reste des sauren Reinigungsmittels in der Milch führenden Strömungsleitung würden zudem unausweichlich ein Ausflocken der Milch bei einer anschließenden Zubereitung eines Getränkes nach sich ziehen, was eine Folge der Denaturierung des Emulgatorproteins Casein durch die Säureeinwirkung ist. Die Milch wäre folglich unbrauchbar und würde sauer werden. Aus diesem Grund werden in jüngster Zeit vermehrt ausschließlich alkalische oder basische Reinigungsmittel zum Einsatz gebracht, da diese in begrenztem Umfang auch Kalkablagerungen im Strömungsleitungssystem eines Getränkeautomaten entfernen können. Allerdings ist hierfür eine häufige Anwendung und eine intensive Spülung mit Wasser erforderlich, was einerseits wenig Ressourcen schonend ist und andererseits große Mengen an Reinigungsmitteln erfordert. Daher muss der Nutzer eines derartigen Getränkeautomaten die entsprechenden Vorratsbehälter verhältnismäßig häufig austauschen beziehungsweise erneut mit Reinigungsmittel befüllen. Der damit verbundene Aufwand ist nicht erstrebenswert.

Die DE 10 2010 010 546 A1 beschreibt eine Möglichkeit, das Strömungsleitungssystem eines Getränkeautomaten von Milchresten zu befreien, die einen derart intensiven Reinigungsaufwand erfordert. So werden nach dieser Druckschrift mehrere Reinigungsvorgänge nacheinander durchgeführt. In einem ersten Reinigungsvorgang wird zunächst kaltes Wasser durch das Milch führende Strömungsleitungssystem geleitet. Anschließend erfolgen insgesamt mindestens zwei weitere, separate Reinigungsvorgänge, wobei zunächst das Reinigungsmittel, insbesondere vermischt mit vorzugsweise heißem Wasser, durch das Milch führende Strömungsleitungssystem geleitet wird und in einem weiteren, zeitlich nachfolgenden Reinigungsvorgang nicht mit Reinigungsmittel vermischtes, heißes Wasser durch das Milch führende Strömungsleitungssystem geleitet wird. Abschließend erfolgt mindestens ein weiterer Spülvorgang, der bevorzugt mit heißem Wasser durchgeführt wird. Es ist nachvollziehbar, dass ein derartiges Reinigungsverfahren nicht nur extrem energieintensiv, sondern darüber hinaus auch aufwändig ist und eine geraume Zeit in Anspruch nimmt.

In der EP 2 078 481 B1 wird ein Reinigungsmodul vorgeschlagen, das mindestens drei Reinigungsmittelbehälter aufweist, so dass auch eine Reinigung gemäß hohen lebensmitteltechnischen Standards durch ein erstes, ein zweites Reinigungsmittel und anschließend ein Desinfektionsmittel mit dem Reinigungsmodul vollautomatisch durchführbar ist. Bei diesem Reinigungsverfahren werden sukzessive und/oder gleichzeitig zwei verschiedene Reinigungsmittel verwendet, ohne dass ein Eingreifen des Benutzers notwendig wäre. Ein vorgegebenes Steuerprogramm steuert dabei eine Dosiervorrichtung über einen Steueranschluss, sodass zu gewünschten Zeitpunkten das vorgegebene Reinigungsmittel oder ein vorgegebenes Mischverhältnis aus zwei Reinigungsmitteln in eine Ausgabekammer eingebracht wird und von dieser in das Strömungsleitungssystem zur Herstellung flüssiger Lebensmittel gefördert wird, um eine gewünschte Reinigungswirkung zu erzielen. Die Reinigungsmittelbehälter und eine Dosiervorrichtung können dabei für Reinigungsmittel unterschiedlicher Zustandsformen ausgeführt sein. So kann der Reinigungsmittelbehälter des Reinigungsmoduls als Tablettenbehälter und die Dosiervorrichtung entsprechend als Tablettendosiervorrichtung ausgestaltet sein. Ebenso ist in der Druckschrift eine Ausführung des Reinigungsmittelbehälters zur Aufnahme von pulverförmigem Reinigungsmittel erwähnt, bei der die Dosiervorrichtung entsprechend ausgestaltet ist und das Reinigungsmittel beispielsweise mittels einer Schneckenförderung transportiert, so dass eine durch die Steuersignale vorgegebene Menge des Reinigungsmittelpulvers in die Ausgabekammer gefördert wird. Die EP 2 078 481 B1 gibt jedoch abgesehen von dem erwähnten Desinfektionsmittel keinen Hinweis darauf, welche Reinigungsmittel hierbei wie zum Einsatz kommen sollen. Das in dieser Schrift vorgestellte Reinigungsverfahren ist darüber hinaus ebenso aufwändig gestaltet, wie die hierfür zum Einsatz kommende Reinigungsvorrichtung, deren Aufbau sich aus einer Vielzahl komplex miteinander zusammenwirkender Baugruppen zusammensetzt.

Aus der WO 2013-026 567 A1 ist darüber hinaus eine Getränkemaschine bekannt, bei der ein Fett und/oder Öl und/oder Protein und/oder Polysaccharid lösender Flüssigreiniger zum Einsatz kommt, und/oder dass der Flüssigreiniger ein Entkalkungsmittel umfasst. Hierbei wird folglich ein Gemisch aus zwei unterschiedlichen Reinigungsmitteln verwendet, was zur Folge hat, dass hier kein basisches Reinigungsmittel mit einem sauren Reinigungsmittel vermengt wird, da sich die Reinigungsmittel ansonsten gegenseitig neutralisieren würden.

Die EP1 911 382 A1 offenbart ein Verfahren zur Reinigung von milchführenden Leitungen in einem Getränkebereiter, bei dem aus einer Mischkammer mit Reinigungsmittel versetztes Wasser in die milchführenden Leitungen eingelassen wird. Hierbei wird die Reinigerlösung alkalisch konditioniert, also mit einem PH Wert von 10 oder 11, und bei Erkennung dieses vorgegebenen PH-Wertes wird der Reinigungsvorgang fortgesetzt. Hierbei wird die Möglichkeit genannt, dass alternativ anstelle der basischen Lösung eine saure Lösung mit einem PH-Wert von unterhalb 4 verwendet werden kann.

Der Erfindung stellt sich somit das Problem, ein Verfahren zur Reinigung eines Milch führenden Strömungsleitungssystems eines Getränkeautomaten bereitzustellen, das mit wenigen Verfahrensschritten, auf einfache Weise und damit anwenderfreundlich eine effiziente, hygienische Reinigung des Strömungsleitungssystems von Kalkablagerungen und Proteinbeziehungsweise Eiweißablagerungen ermöglicht. Darüber hinaus ist ein Getränkeautomat anzugeben, der zur Anwendung des Verfahrens geeignet ist.

Erfindungsgemäß wird dieses Problem durch ein Verfahren zur Reinigung eines Milch führenden Strömungsleitungssystems eines Getränkeautomaten mit den Merkmalen des Patentanspruches 1 und mittels eines Getränkeautomaten zur Durchführung des Verfahrens mit den Merkmalen des Patentanspruches 7 gelöst.

Vorteilhafte Ausgestaltungen und Weiterbildungen der Erfindung ergeben sich aus den sichjeweils anschließenden Unteransprüchen.

Das erfindungsgemäße Verfahren zur Reinigung eines Milch führenden Strömungsleitungssystems eines Getränkeautomaten, ist dadurch gekennzeichnet, dass zumindest in die Milch führenden Abschnitte des Strömungsleitungssystems des während der Reinigung für einen Getränkebezug gesperrten Getränkeautomaten in einem ersten Reinigungsschritt ein Reinigungsmittel mit einem pH-Wert > 7,0 geleitet und anschließend in einem weiteren Reinigungsschritt ein zweites Reinigungsmittel mit einem pH-Wert < 7,0 wenigstens durch die gleichen Abschnitte des Strömungsleitungssystems geleitet wird.

Bei der Erfindung werden zwei unterschiedliche Reinigungssysteme miteinander verbunden. Zuerst wird der Milch führende Abschnitt des Strömungsleitungssystems mit dem alkalischen beziehungsweise basischen Mittel gereinigt. Hierbei werden durch Hydrolyse beziehungsweise basische Esterverseifung die Fette und Proteine gelöst. Nach dieser alkalischen beziehungsweise basischen Reinigung wird eine selbstständige, das heißt, automatische Entkalkung durchgeführt, die auch in den Milch führenden Abschnitten des Strömungsleitungssystems erfolgt. Hierin liegt die Besonderheit der erfindungsgemäßen Lösung. Mit dieser Vorgehensweise wird das gesamte Strömungsleitungssystem optimal von sämtlichen Ablagerungen gereinigt, unabhängig davon welcher Natur diese sind. Somit kann eine höchsten hygienischen Ansprüchen gerecht werdende Säuberung des Strömungsleitungssystems erreicht werden. Das Verfahren ist insgesamt relativ einfach durchführbar und kann vollständig automatisiert werden, so dass es sehr anwenderfreundlich gestaltet ist.

Es ist bekannt, dass sich saure Lösungen mit einem pH-Wert < 7,0 und basische Lösungen mit einem pH-Wert > 7,0 bei einem Zusammentreffen chemisch betrachtet gegenseitig neutralisieren. Natürlich kann dennoch nach dem ersten Reinigungsvorgang mit einem alkalischen beziehungsweise basischen Reinigungsmittel unmittelbar das saure Reinigungsmittel in das Strömungsleitungssystem eingebracht werden. Dabei tritt der Effekt ein, dass die noch im Strömungsleitungssystem verbliebenen Reste des zuvor eingesetzten, basischen Reinigungsmittels zunächst Teile des nachfolgenden, sauren Reinigungsmittels neutralisieren. Bei stetiger, weiterer Zuführung des sauren Reinigungsmittels werden nach und nach die Reste des basischen Reinigungsmittels aus dem Strömungsleitungssystem entfernt und der Charakter des Reinigungsmittels verstärkt sich in Richtung eines pH-Wertes < 7,0, das heißt, das saure Reinigungsmittel überwiegt im Strömungsleitungssystem, bis schließlich das basische Reinigungsmittel nicht mehr nachweisbar ist. Diese Möglichkeit der Vorgehensweise liegt im Bereich der Erfindung, wobei eine erste Ausgestaltung der Erfindung dahin geht, zwischen dem ersten und dem zweiten Reinigungsschritt zumindest eine Spülung mit Wasser oder einem Mittel durchzuführen, dessen pH-Wert neutral ist. Auf diese Weise wird das alkalische Reinigungsmittel unmittelbar aus dem Strömungsleitungssystem entfernt und das saure Reinigungsmittel kann dem Strömungsleitungssystem anschließend ohne Verzögerung zugeführt werden. Hieraus ergibt sich in vorteilhafter Weise eine Einsparung der zum Einsatz kommenden Reinigungsmittel und eine zeitliche Verkürzung des Reinigungsvorganges.

Während die Reinigung des Strömungsleitungssystems von Proteinen beziehungsweise Eiweißen mit Hilfe des basischen Reinigungsmittels, dessen pH-Wert > 7,0 beträgt, verhältnismäßig zügig möglich ist, sollte das saure Reinigungsmittel mit einem pH-Wert < 7,0 nach seiner Einbringung in das Strömungsleitungssystem für eine definierte Zeitdauer in dem Strömungsleitungssystem verbleiben, um das Strömungsleitungssystem effektiv von Kalkresten zu befreien. Diese Zeitdauer ist erforderlich, da Kalk verhältnismäßig schwer lösbar ist.

Versuche haben ergeben, dass diese Zeitdauer zwischen 1 und 3 Stunden betragen sollte, wobei sehr gute Ergebnisse bereits nach 2 Stunden erzielt werden können. In Anbetracht der für die Entkalkung erforderlichen Zeitdauer ist es sinnvoll, diesen Reinigungsvorgang zu Zeiten durchzuführen, in denen der Getränkeautomat nicht eingesetzt wird. Hierbei kann es sich beispielsweise um die Nachtstunden handeln.

Gründliche Spülungen mit Wasser oder einem Mittel, dessen pH-Wert neutral ist, sind in jedem Fall vorteilhaft, um Reste der Reinigungsmittel aus dem Strömungsleitungssystem zu entfernen. Um dennoch den Aufwand für die Reinigung des Strömungsleitungssystems des Getränkeautomaten in Grenzen zu halten, wird ferner vorgeschlagen, dass nach dem ersten Reinigungsschritt und nach dem zweiten Reinigungsschritt jeweils mindestens eine Spülung mit Wasser oder einem Mittel durchgeführt wird, dessen pH-Wert neutral ist. Der gesamte Reinigungsvorgang kann folglich mit nur zwei Spülvorgängen abgeschlossen sein, von denen ein erster nach der Reinigung mit dem basischen Reinigungsmittel und der zweite Spülvorgang nach der Reinigung mit dem sauren Reinigungsmittel erfolgt.

Während die Entkalkungsvorgänge in einem Getränkeautomaten regelmäßig durchgeführt werden sollten, um das Strömungsleitungssystem von Kalkablagerungen freizuhalten, ist eine Reinigung der Milch führenden Abschnitte des Strömungsleitungssystems nur dann erforderlich, wenn auch tatsächlich Milch für die Zubereitung eines Getränkes verwendet wurde. Um hier eine sinnvolle Steuerung der Reinigungsvorgänge zu gewährleisten, geht eine Weiterbildung der Erfindung dahin, dass ein durch wenigstens einen Sensor erzeugtes Signal zur Erfassung eines am Getränkeautomaten erfolgten Milchbezuges mittels einer Steuerungseinheit erfasst wird und der erste Reinigungsschritt nur dann aktiviert wird, wenn in dem Getränkeautomaten Milch verarbeitet wurde. Somit lässt sich die Reinigung des Getränkeautomaten selektiv sehr genau auf die tatsächliche Benutzung abgestellt durchführen, was nicht nur Reinigungsmittel, sondern darüber hinaus auch Zeit für die Reinigung einspart.

Ein Getränkeautomat zur Durchführung des zuvor beschriebenen Verfahrens und zur Zubereitung von Aufgussgetränken, worunter beispielsweise Kaffeegetränke oder Teegetränke zu verstehen sind, weist zumindest eine Wasserquelle, Strömungsleitungen, eine Pumpe, einen Vorratsbehälter für ein Reinigungsmittel, einen Milchbehälter sowie Entnahmeeinrichtungen auf. Von den Strömungsleitungen des Getränkeautomaten führen einige ausschließlich Wasser, während andere Strömungsleitungen ausschließlich oder zusätzlich als Milch führende Strömungsleitungen Verwendung finden. Der erfindungsgemäßer Getränkeautomat ist dadurch gekennzeichnet, dass für jedes Reinigungsmittel wenigstens ein durch jeweils mindestens ein Ventil ansteuerbarer Vorratsbehälter vorhanden ist. Durch die Ventilsteuerung kann jeweils gezielt einer der Vorratsbehälter ausgewählt werden, um dadurch eine sequenzielle Reihenfolge bei der Einleitung der mit konträren chemischen Eigenschaften ausgestatteten Reinigungsmittel in das Strömungsleitungssystem zu erreichen. Zudem sind die Ventile in vorteilhafter Weise nutzbar, um die Spülung beispielsweise vor, zwischen und nach den Reinigungsvorgängen zu realisieren. Als Vorratsbehälter kann entweder ein Einwegbehälter oder ein nachfüllbarer Mehrwegbehälter dienen. Das von der Wasserquelle stammende, frische Wasser wird benötigt, um das Reinigungsmittel in eine Lösung zu überführen. Je nach Ausführung des Getränkeautomaten kann es sich hierbei um einen fest installierten Wasseranschluss oder einen Wassertank handeln.

Wie bereits angedeutet wurde, können gemäß einer Ausgestaltung des Getränkeautomaten die Ventile zur wahlweisen Ansteuerung der Vorratsbehälter Mehrwegeventile sein. Mehrwegeventile sind von Vorteil, weil sie mehrere Funktionen aufweisen und damit zu einer kompakten Gestaltung des Getränkeautomaten führen.

Um zu vermeiden, dass in unerwünschter Weise eines der Reinigungsmittel in den für die Zubereitung eines Getränkes genutzten Teil des Strömungsleitungssystems gerät, wird darüber hinaus vorgeschlagen, dass zumindest einer der Vorratsbehälter in einen Bypass des zu reinigenden Abschnittes des Strömungsleitungssystems integriert ist. Ein derartiger Bypass eignet sich in vorteilhafter Weise dazu, eine optimale Trennung zwischen dem Teil des Strömungsleitungssystems, in dem sich der Vorratsbehälter befindet und dem für die Zubereitung der Getränke genutzten Abschnitt des Strömungsleitungssystem zu erreichen. Auf diese einfache Weise lässt sich somit eine optimale Trennung der Abschnitte des Strömungsleitungssystem gewährleisten, was hygienischen Gesichtspunkten optimal gerecht wird. Zudem lassen sich dadurch gesundheitliche Beeinträchtigungen bei der Zubereitung der Getränke zuverlässig ausschließen. Auch für die Umsetzung der Bypass-Lösung sind Mehrwegeventile von Vorteil.

Eine besondere Ausführungsvariante eines erfindungsgemäßen Getränkeautomaten besteht darüber hinaus darin, dass die Vorratsbehälter in Strömungsrichtung betrachtet sequentiell zueinander angeordnet sind, wobei der Vorratsbehälter mit dem Reinigungsmittel, dessen pH-Wert > 7,0 beträgt, dem Vorratsbehälter mit dem Reinigungsmittel, dessen pH-wert < 7,0 beträgt, nachfolgend in das Strömungsleitungssystem des Getränkeautomaten eingebunden ist. auf diese Weise lässt sich gewährleisten, dass der mit einem basischen Reinigungsmittel befüllte Vorratsbehälter das Reinigungsmittel nur in die Abschnitte des Strömungsleitungssystems abgibt, die mit Milch beaufschlagten werden, während der mit einem sauren Reinigungsmittel befüllte Vorratsbehälter dieses Reinigungsmittel dem gesamten, Wasser führenden Strömungsleitungssystem zur Verfügung stellt, damit dieses optimal entkalkt werden kann.

Die Erfindung wird nachfolgend anhand der beigefügten Zeichnungen näher erläutert. Das gezeigte Ausführungsbeispiel stellt dabei keine Einschränkung auf die dargestellte Variante dar, sondern dient lediglich der Erläuterung eines Prinzips der Erfindung. Gleiche oder gleichartige Bauteile werden stets mit denselben Bezugsziffern bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.

Es zeigt
- Figur 1: einen Getränkeautomaten als Einbaugerät in einem Küchenschrank
und
- Figur 2: einen Ausschnitt aus einem Strömungsleitungssystem des Getränkeautomaten

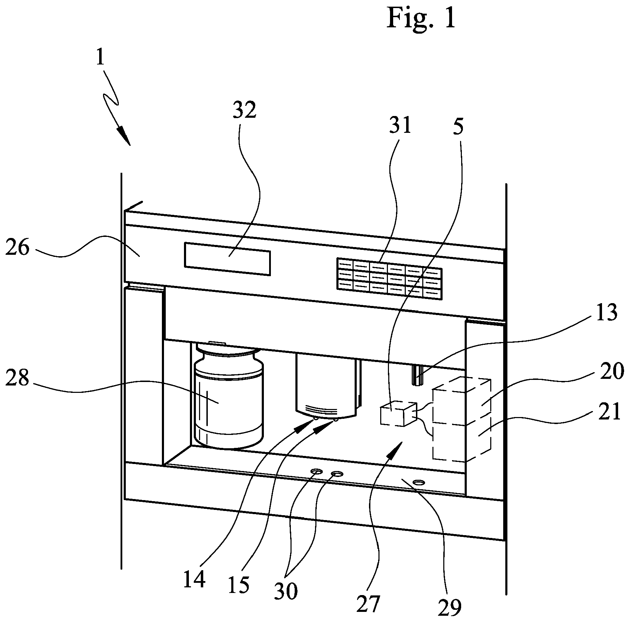

Die Figur 1 zeigt die Frontansicht eines Getränkeautomaten 1 am Beispiel eines in einen Küchenschrank eingesetzten und zur Zubereitung von Kaffeegetränken beziehungsweise Kaffeemischgetränken dienenden Kaffeeautomaten. Die durch eine Blende 26 gebildete Front des Getränkeautomaten 1 weist zunächst eine Vertiefung 27 auf, in der sich mehrere Entnahmeeinrichtungen 13, 14, 15 befinden. Eine in ihrer Höhe verstellbare Ausgabeeinheit weist hier zum Beispiel in ihrem unteren Bereich zwei Entnahmeeinrichtungen 14 und 15 auf, wobei die Entnahmeeinrichtung 14 zur Abgabe von Kaffeegetränken dient und über die Entnahmeeinrichtung 15 erwärmte Milch entnommen werden kann. Die Entnahmeeinrichtung 13 ist vorliegend als Düse ausgeführt, die zur Abgabe von Wasserdampf verwendet wird, wie er beispielsweise für die Zubereitung eines Milchschaumes zum Einsatz kommt. Seitlich neben den Entnahmeeinrichtungen 14 und 15 befindet sich ein Milchbehälter 28, der lösbar in die Vertiefung 27 eingehängt ist und aus dem Milch entnommen werden kann, um Kaffeemischgetränke herzustellen oder heiße Milch beziehungsweise Kakaogetränke zu erzeugen. Die untere Begrenzung der Vertiefung 27 wird durch eine Abtropfplatte 29 gebildet, die die von den Entnahmeeinrichtung 13-15 abtropfenden Flüssigkeitsreste in einen unterhalb der Abtropfplatte 29 vorhandenen Auffangbehälter abführt. Hierzu sind in die Abtropfplatte 29 mehrere Öffnungen 30 eingebracht. Verdeckt durch die Blende 26 befinden sich im Geräteinneren durch gestrichelte Linien in der Figur 1 nur angedeutete Vorratsbehälter 20, 21 sowie eine Steuerungseinheit 5. In dem Vorratsbehälter 20 ist ein Reinigungsmittel mit einem pH-Wert > 7,0 und in dem Vorratsbehälter 21 ein Reinigungsmittel mit einem pH-Wert < 7,0 enthalten. Um dem Anwender des Getränkeautomaten 1 die Möglichkeit der Dateneingabe zu geben, weist die Blende 26 ferner eine Eingabeeinheit 31 auf, bei der es sich vorliegend um eine Tastatur handelt. Hierüber lassen sich gegebenenfalls erforderliche Daten eingeben, die in der Steuerungseinheit 5 des Getränkeautomaten 1 gespeichert und verarbeitet werden können. Bei diesen Daten kann es sich beispielsweise um ein Datum und/oder eine Zeit für den Beginn eines Reinigungsvorganges oder um die Karbonat- beziehungsweise Wasserhärte handeln. Zur Erleichterung der Kontrolle der eingegebenen Werte und/oder zur Informationsvermittlung des Getränkeautomaten 1 an den Anwender ist darüber hinaus eine Anzeigeeinrichtung 32 vorhanden, die hier ebenfalls in die Blende 26 integriert wurde und im einfachsten Fall ein Digitaldisplay sein kann. Hierüber können Anzeigen erforderlicher Eingaben oder Aufforderungen zu bestimmten Handlungen optisch sichtbar gemacht werden.

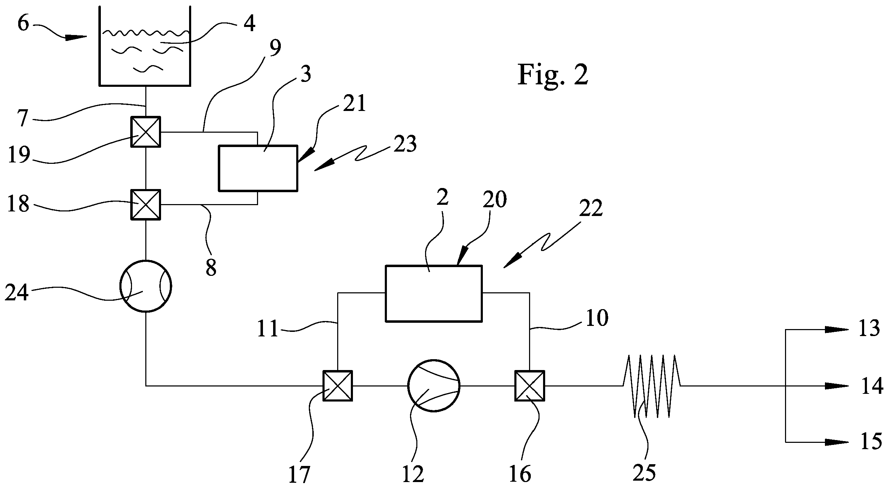

Aus der Figur 2 geht ein Ausschnitt aus einem Strömungsleitungssystem des Getränkeautomaten 1 hervor, wie er im Zusammenhang mit der Beschreibung der Figur 1 bereits erläutert wurde. Der für die Zubereitung eines Getränkes genutzte Abschnitt eines Strömungsleitungssystems weist zunächst eine Wasserquelle 6 auf, bei der es sich vorliegend um einen Wassertank handelt, in dem frisches Wasser 4 aufgenommen ist. Ausgehend von dieser Wasserquelle 6 führt eine Hauptströmungsleitung 7 bis zu mehreren Entnahmeeinrichtungen 13, 14, 15, von denen die Entnahmeeinrichtung 13 zur Abgabe von heißem Wasser beziehungsweise Wasserdampf, die Entnahmeeinrichtung 14 zur Abgabe eines Kaffeegetränkes und die Entnahmeeinrichtung 15 zur Abgabe erwärmter Milch dient. In die Hauptströmungsleitung 7 ist in Strömungsrichtung betrachtet ferner ein Durchflussmessgerät 24 in Form eines "Flowmeters" integriert, dem eine Pumpe 12 zur Erzeugung der Strömung innerhalb des Strömungsleitungssystems und eine Heizeinrichtung 25 folgt. Die Besonderheit der dargestellten Ausführungsvariante eines Teils des Strömungsleitungssystems eines Getränkeautomaten 1 besteht hierbei darin, dass an die Hauptströmungsleitung 7 sequenziell nacheinander zwei Bypässe 21 und 22 angeschlossen sind. Ein erster Bypass 23 verläuft zwischen zwei Ventilen 18 und 19 und weist einen Vorratsbehälter 21 auf, in dem ein saures Reinigungsmittel 3 mit einem pH-Wert < 7,0 enthalten ist. Von dem Ventil 18 zweigt hierbei eine Abzweigungsleitung 8 ab, die in den Vorratsbehälter 21 mündet. Von dem Vorratsbehälter 21 geht ferner eine Rückführungsleitung 9 ab, die unmittelbar mit dem Ventil 19 gekoppelt ist. Der in Strömungsrichtung betrachtet diesem Bypass 23 sequenziell nachgeschaltete, zweite Bypass 22 weist ebenfalls zwei Ventile 16 und 17 auf, wobei von dem Ventil 16 eine Zweigleitung 10 in den Vorratsbehälter 20 mündet und eine Zuführungsleitung 11 vom Vorratsbehälter 20 zu dem Ventil 17 verläuft. Der Vorratsbehälter 20 weist ein basisches Reinigungsmittel mit einem pH-Wert > 7,0 auf. Sämtliche Ventile 16, 17, 18, 19 sind hierbei als Mehrwegeventile ausgeführt. Die Reinigung des Strömungsleitungssystems des Getränkeautomaten 1 gestaltet sich derart, dass in regelmäßigen Abständen eine Entkalkung des gesamten Strömungsleitungssystems in an sich bekannter Weise erfolgt. Hierzu wird nach Sperrung des Getränkeautomaten 1 für einen Getränkebezug zunächst das Ventil 18 geöffnet, so dass durch die Abzweigungsleitung 8 frisches Wasser 4 aus der Wasserquelle 6 in den Vorratsbehälter 21 gelangt, in dem das saure Reinigungsmittel 3 mit einem pH-Wert < 7,0 enthalten ist. Ein Teil des Reinigungsmittels 3 geht in Lösung über und wird anschließend über die Rückführungsleitung 9 und das Ventil 19 in die Hauptströmungsleitung 7 überführt, wo es mit Hilfe der Pumpe 12 innerhalb des Strömungsleitungssystems verteilt wird und für mindestens 2 Stunden verbleibt, um den im Strömungsleitungssystem enthaltenen Kalk zu lösen. Dabei können während der Einbringung des sauren Reinigungsmittels 3 in das Strömungsleitungssystem auch die Entnahmeeinrichtungen 13-15 kurzzeitig geöffnet werden, so dass auch diese mit dem gelösten Reinigungsmittel 3 beaufschlagt sind.

Liegt ein Signal vor, das den zuvor erfolgten Bezug von Milch detektiert, so muss auch eine alkalische beziehungsweise basische Reinigung der Milch führenden Teile des Strömungsleitungssystems erfolgen. Über die Steuerungseinheit 5 wird in einem solchen Fall zunächst das Ventil 16 des Bypasses 22 angesteuert und geöffnet. Dies hat zur Folge, dass frisches Wasser 4 aus der Wasserquelle 6 in das Strömungsleitungssystem eingebracht wird und über die Hauptströmungsleitung 7 und das geöffnete Ventil 16 sowie über die Zweigleitung 10 in den Vorratsbehälter 20 gelangt, in dem sich das basische Reinigungsmittel 2 mit einem pH-Wert > 7,0 befindet. Das Reinigungsmittel 2 wird dadurch gelöst, so dass die Lösung über die Zuführungsleitung 11 und das nunmehr ebenfalls geöffnete Ventil 17 unmittelbar in die Teile des Strömungsleitungssystems gelangt, die zuvor mit Milch beaufschlagt wurden. Der besondere Vorteil dieser Vorgehensweise und der Anordnung des Bypasses 22 derart, dass die Pumpe 12 sich innerhalb des Bypasses 22 befindet, liegt darin, dass die Pumpe 12 bei der Reinigung mit dem basischen Reinigungsmittel 2 ebenfalls von Resten der Milch befreit wird. Nach Abschluss der Reinigung der Milch führenden Abschnitte des Strömungsleitungssystems werden die Ventile 16 und 17 geschlossen und es erfolgt die zuvor bereits beschriebenen Reinigung des gesamten Strömungsleitungssystems mit dem sauren Reinigungsmittel 3 aus dem Vorratsbehälter 21 des Bypasses 23.

### BEZUGSZEICHENLISTE

- 1: Getränkeautomat
- 2: Reinigungsmittel (alkalisch/basisch)
- 3: Reinigungsmittel (sauer)
- 4: Wasser
- 5: Steuerungseinheit
- 6: Wasserquelle
- 7: Hauptströmungsleitung
- 8: Abzweigungsleitung
- 9: Rückführungsleitung
- 10: Zweigleitung
- 11: Zuführungsleitung
- 12: Pumpe
- 13: Entnahmeeinrichtung (Heißwasser/Dampf)
- 14: Entnahmeeinrichtung (Kaffee)
- 15: Entnahmeeinrichtung (Milch)
- 16: Ventil
- 17: Ventil
- 18: Ventil
- 19: Ventil
- 20: Vorratsbehälter
- 21: Vorratsbehälter
- 22: Bypass
- 23: Bypass
- 24: Durchflussmessgerät
- 25: Heizeinrichtung
- 26: Blende
- 27: Vertiefung
- 28: Milchbehälter
- 29: Abtropfplatte
- 30: Öffnungen
- 31: Eingabeeinheit (Tastatur)
- 32: Anzeigeeinrichtung (Display)

## Patentansprüche

1. Verfahren zur Reinigung eines Milch führenden Strömungsleitungssystems eines Getränkeautomaten,
wobei
zumindest in die Milch führenden Abschnitte des Strömungsleitungssystems des während der Reinigung für einen Getränkebezug gesperrten Getränkeautomaten (1) in einem ersten Reinigungsschritt ein Reinigungsmittel (2) mit einem pH-Wert > 7,0 geleitet wird, um mittels basischer Esterverseifung Fette und Proteine zu lösen,
**dadurch gekennzeichnet,**
**dass** anschließend nach dieser alkalischen beziehungsweise basischen Reinigung in einem weiteren Reinigungsschritt ein zweites, saures Reinigungsmittel (3) mit einem pH-Wert < 7,0 wenigstens durch die gleichen Abschnitte des Strömungsleitungssystems geleitet wird zur Durchführung einer selbständigen Entkalkung.

2. Verfahren nach Anspruch 1,
**dadurch gekennzeichnet, dass**
zwischen dem ersten und dem zweiten Reinigungsschritt zumindest eine Spülung mit Wasser (4) oder einem Mittel durchgeführt wird, dessen pH-Wert neutral ist.

3. Verfahren nach Anspruch 1 oder 2,
**dadurch gekennzeichnet, dass**
das Reinigungsmittel (3) mit einem pH-Wert < 7,0 nach seiner Einbringung in das Strömungsleitungssystem für eine definierte Zeitdauer in dem Strömungsleitungssystem verbleibt.

4. Verfahren nach Anspruch 3,
**dadurch gekennzeichnet, dass**
die Zeitdauer zwischen 1 und 3 Stunden beträgt.

5. Verfahren nach einem der vorstehend genannten Ansprüche,
**dadurch gekennzeichnet dass**,
nach dem ersten Reinigungsschritt und nach dem zweiten Reinigungsschritt jeweils mindestens eine Spülung mit Wasser (4) oder einem Mittel durchgeführt wird, dessen pH-Wert neutral ist.

6. Verfahren nach einem der vorstehend genannten Ansprüche,
**dadurch gekennzeichnet dass**,
ein durch wenigstens einen Sensor erzeugtes Signal zur Erfassung eines am Getränkeautomaten (1) erfolgten Milchbezuges mittels einer Steuerungseinheit (5) erfasst wird und der erste Reinigungsschritt nur dann aktiviert wird, wenn in dem Getränkeautomaten (1) Milch verarbeitet wurde.

7. Getränkeautomat mit zumindest einer Wasserquelle (6), Strömungsleitungen (7, 8, 9, 10, 11), einer Pumpe (12), einem Vorratsbehälter (20, 21) zur Aufnahme von Reinuaunasmittel (2, 3), einem Milchbehälter (28) sowie Entnahmeeinrichtungen (13, 14, 15), wobei
für jedes Reinigungsmittel (2, 3) wenigstens ein durch jeweils mindestens ein Ventil (16, 17, 18, 19) ansteuerbarer Vorratsbehälter (20, 21) vorhanden ist,
**dadurch gekennzeichnet,**
**dass** zumindest einer der Vorratsbehälter (20, 21) in einen Bypass (22, 23) des zu reinigenden Abschnittes des Strömungsleitungssystems integriert ist.

8. Getränkeautomat nach Anspruch 7,
**dadurch gekennzeichnet, dass** die Ventile ((16, 17, 18, 19) zur wahlweisen Ansteuerung der Vorratsbehälter (20, 21)
ausgebildet sind.

9. Getränkeautomat nach einem der Ansprüche 7 bis 8,
**dadurch gekennzeichnet, dass**
die Vorratsbehälter (20, 21) in Strömungsrichtung betrachtet sequentiell zueinander angeordnet sind, wobei der Vorratsbehälter (20) mit dem Reinigungsmittel (2) dessen pH-Wert > 7,0 beträgt, dem Vorratsbehälter (21) mit dem Reinigungsmittel (3) dessen pH-Wert < 7,0 beträgt, nachfolgend in das Strömungsleitungssystem des Getränkeautomaten (1) eingebunden ist.

## Claims

1. Method for cleaning a milk-conveying flow-line system of a drinks machine,
a cleaning agent (2) having a pH of more than 7.0 being guided, in a first cleaning step, at least into the milk-conveying portions of the flow-line system of the drinks machine (1), which machine is disabled for obtaining drinks during cleaning, in order to dissolve fats and proteins by means of basic ester saponification,
**characterised in that**,
subsequently, in a further cleaning step, after this alkaline or basic cleaning process, a second, acidic cleaning agent (3) having a pH of less than 7.0 is then guided at least through the same portions of the flow-line system, in order to carry out an automatic descaling process.

2. Method according to claim 1,
**characterised in that**,
between the first and second cleaning steps, at least one rinsing process is carried out using water (4) or an agent that has a neutral pH.

3. Method according to either claim 1 or claim 2,
**characterised in that**
the cleaning agent (3) having a pH of less than 7.0 remains in the flow-line system for a specified period of time after being introduced into the flow-line system.

4. Method according to claim 3,
**characterised in that**
the period of time is between 1 and 3 hours.

5. Method according to any of the preceding claims,
**characterised in that**,
after the first cleaning step and after the second cleaning step, at least one rinsing process is carried out in each case using water (4) or an agent that has a neutral pH.

6. Method according to any of the preceding claims,
**characterised in that**
a signal, generated by at least one sensor, for detecting that milk has been obtained from the drinks machine (1) is detected by means of a control unit (5), and the first cleaning step is activated only if milk has been processed in the drinks machine (1).

7. Drinks machine comprising at least one water source (6), flow lines (7, 8, 9, 10, 11), a pump (12), a storage container (20, 21) for receiving a cleaning agent (2, 3), a milk container (28) and discharge means (13, 14, 15),
at least one storage container (20, 21) that can be actuated by at least one valve (16, 17, 18, 19) in each case being available for each cleaning agent (2, 3),
**characterised in that**
at least one of the storage containers (20, 21) is integrated in a bypass (22, 23) of the portion to be cleaned of the flow-line system.

8. Drinks machine according to claim 7,
**characterised in that** the valves (16, 17, 18, 19) are designed to selectively actuate the storage containers (20, 21).

9. Drinks machine according to either claim 7 or claim 8,
**characterised in that**
the storage containers (20, 21) are arranged mutually sequentially when viewed in the flow direction, the storage container (20) containing the cleaning agent (2) having a pH of more than 7.0 being incorporated in the flow-line system of the drinks machine (1) downstream of the storage container (21) containing the cleaning agent (3) having a pH of less than 7.0.

## Revendications

1. Procédé de nettoyage d'un système de conduites d'écoulement conductrices de lait d'un distributeur de boissons, dans lequel, lors d'une première étape de nettoyage, un agent nettoyant (2) ayant une valeur de pH >7,0 est dirigé au moins dans les sections conductrices de lait du système de conduites d'écoulement du distributeur de boissons (1), qui est bloqué pour l'acquisition de boissons pendant le nettoyage, pour dissoudre des matières grasses et des protéines au moyen d'une saponification d'esters basique,
**caractérisé en ce que**,
suite à ce nettoyage alcalin ou basique, lors d'une autre étape de nettoyage, un deuxième agent nettoyant (3) acide ayant une valeur de pH < 7,0 est dirigé au moins à travers les mêmes sections du système de conduites d'écoulement pour réaliser un détartrage indépendant.

2. Procédé selon la revendication 1,
**caractérisé en ce que**,
entre la première et la deuxième étape de nettoyage, au moins un rinçage est réalisé avec de l'eau (4) ou un agent dont le pH est neutre.

3. Procédé selon la revendication 1 ou 2,
**caractérisé en ce que**
l'agent nettoyant (3) ayant une valeur de pH < 7,0 reste pendant une durée définie dans le système de conduites d'écoulement après son introduction dans le système de conduites d'écoulement.

4. Procédé selon la revendication 3,
**caractérisé en ce que**
la durée représente entre 1 et 3 heures.

5. Procédé selon l'une des revendications précédentes,
**caractérisé en ce que**,
après la première étape de nettoyage et après la deuxième étape de nettoyage respectivement, au moins un rinçage est réalisé avec de l'eau (4) ou un agent dont la valeur de pH est neutre.

6. Procédé selon l'une des revendications précédentes,
**caractérisé en ce qu'**
un signal, généré par au moins un capteur, pour la détection d'une acquisition de lait survenue dans le distributeur de boissons (1) est détecté au moyen d'une unité de commande (5) et la première étape de nettoyage n'est ensuite activée que lorsque du lait a été traité dans le distributeur de boissons (1).

7. Distributeur de boissons avec au moins une source d'eau (6), des conduites
d'écoulement (7, 8, 9, 10, 11), une pompe (12), un réservoir (20, 21) pour la réception d'agents nettoyants (2, 3), un réservoir à lait (28) ainsi que des dispositifs de retrait (13, 14, 15), dans lequel pour chaque agent nettoyant (2, 3) au moins un réservoir (20, 21) pouvant être commandé respectivement par un clapet (16, 17, 18, 19) est présent,
**caractérisé en ce qu'**
au moins un des réservoirs (20, 21) est intégré dans une dérivation (22, 23) de la section à nettoyer du système de conduites d'écoulement.

8. Distributeur de boissons selon la revendication 7,
**caractérisé en ce que** les clapets (16, 17, 18, 19) sont conçus pour la commande sélective des réservoirs (20, 21).

9. Distributeur de boissons selon l'une des revendications 7 à 8,
**caractérisé en ce que**
les réservoirs (20, 21) sont disposés séquentiellement vus dans la direction d'écoulement, dans lequel le réservoir (20) avec l'agent nettoyant (2) dont la valeur de pH > 7,0 est intégré dans le système de conduites d'écoulement du distributeur de boissons (1) à la suite du réservoir (21) avec l'agent nettoyant (3) dont la valeur de pH < 7,0.
